# EUROPEAN PATENT SPECIFICATION

(11) **EP 2 404 208 B1**
(45) Date of publication and mention of the grant of the patent: **03.01.2024**
(21) Application number: 10726183.6
(22) Date of filing: 08.03.2010
(51) Int. Cl.: G02B 21/12, G02B 21/36

(54) **METHOD AND SETUP FOR DARK AND/OR BRIGHT FIELD DIGITIZATION OF A SAMPLE IN TRANSMITTED LIGHT**
VERFAHREN UND AUFBAU ZUR DUNKEL- UND/ODER HELLFELDDIGITALISIERUNG EINER PROBE IN DURCHGELASSENEM LICHT
PROCÉDÉ ET MONTAGE POUR UNE NUMÉRISATION EN FOND CLAIR ET/OU FOND SOMBRE D'UN ÉCHANTILLON DANS UNE LUMIÈRE TRANSMISE

(30) Priority: 06.03.2009 HU 0900142
(43) Date of publication of application: 11.01.2012
(73) Proprietor: 3DHistech Kft., 1141 Budapest (HU)
(72) Inventor: MOLNÁR, Béla, H-1182 Budapest (HU); HEGEDÜS, Márton, H-1026 Budapest (HU); VIRÁG, Tibor, H-1121 Budapest (HU); VARGA, Viktor, Sebestyén, H-1141 Budapest (HU)
(74) Representative: Szabo, Zsolt
(86) International application number: PCT/HU2010/000027
(87) International publication number: WO 2010/100516

(56) References cited:
- WO-A2-2007/023487
- WO-A2-2008/053490
- US-A- 4 601 551
- US-A1- 2003 231 791
- US-A1- 2007 269 085
- US-B1- 6 286 969

## Description

The present invention relates basically to a method and to a setup for dark field digitization of samples (that is, digitization of samples by dark field illumination of the field of the microscope) with or without dyestuffs that are visible in transmitted light.

The analysis of tissue sections is an important field of medical diagnostics. To perform a tissue analysis, the tissue specimen taken from a patient is sliced up in very fine (e.g. 2 to 5 µm thick) sections, which are then placed on glass plates and stained with various dyes. Similarly, smear samples are also arranged on glass plates and stained with various dyestuffs. After staining, the specimen on the slide is first covered with a coating substance and then with a cover glass. Finally, the thus prepared specimen-bearing slide is analyzed by means of a microscope.

In practice, it poses a problem that an undyed specimen arranged on a slide is barely visible to the naked eye in transmitted light due to its small dimension in the direction perpendicular to the plane of the specimen. Therefore, it is difficult to identify its location on the surface of the slide. The task of an observer is even made more difficult by the common routine, according to which the sample is often subjected to a staining procedure wherein a dyestuff (e.g. a fluorescent or a fluorochrom containing dye) invisible in transmitted light is made use of. This means that for the analysis of a slide with respect to the specimen locations and for the subsequently performed optional digitization of said slide (i.e. for taking/recording a digital image of the samples located in various portions of the slide by an imaging device at a given resolution), at first the sample/samples itself/themselves has/have to be found on the slide. For fluorescent assays, during the staining step the samples are particularly labeled with a suitable (fluorochrom) molecule, a distribution of which, as well as the location/locations of the sample/samples on the slide becomes/become apparent after the sample has been illuminated by an exciting light of an appropriate wavelength.

In the processing (assaying, digitization, etc.) of dyed slides it is problematic if the slides stained with dyestuffs visible or invisible in transmitted light have to be subjected to the study mixedly in a single run by means of the same device. This especially occurs in those cases where the task is to process several slides optionally carrying different samples in a continuous and automated manner, independently of the fact whether or not the staining characteristics of the individual slides were known previously.

U.S. Pat. Appl. No. 2003/0210262 discloses a video microscope system for simultaneous displaying of images of a certain portion of a slide obtained through various types of imaging, typically by different illuminations and/or contrast values. Individual images are stored in a database. When constructing said database, the images are captured by means of a light source of fixed position. This, however, is disadvantageous from the point of view of later finding the samples on the slide.

International Publication Pamphlet No. WO 2008/053490 A2 discloses a system, i.e. a lithographic mask inspection tool, and a method for transilluminating an integrated electrical circuit in order to detect defects in lithographic masks. Said system comprises a first light source, a detector having a light sensing surface, an object stage to support and optionally move said electrical circuit to be transilluminated, a second light source, as well as a processing and control unit. According to the defect inspection method, after completing a calibration step, the at least partially transparent object, that is, the electrical circuit, is transilluminated by combining bright field and dark field illumination, i.e. with a beam of light that is provided by a given ratio of the two kinds of illumination applied simultaneously.

The aim of the present invention is to eliminate the above discussed difficulties. In particular, the object of the present invention is to provide such solutions - a method, as well as a setup - by means of which samples containing no dyestuffs visible in transmitted light can be rapidly analyzed, and if desired digitized, in dark field illumination. A further object is to provide such solutions - a method, as well as a setup - that can simultaneously be used in a simple and rapid manner for dark field analysis, and if desired also for digitization, of samples containing dyestuffs that are visible in transmitted light.

The above set object is achieved by a setup in accordance with Claim 1, as well as a method according to Claim 6. Further preferred embodiments of the setup and the method are set forth in Claims 2 to 5 and Claims 7 to 9, respectively.

The disclosed setup comprises a (preferably optical) detector and a slide holder with a slide having sample(s) thereon, said elements are all arranged along a common optical axis. The setup also comprises at least one light source for illuminating the slide and being capable of occupying various spatial positions in at least the plane perpendicular to the optical axis, as well as a processing and control unit, in the form of preferentially a computer, that operates the setup, wherein said light source, in accordance with a pre-set choice, upon an electrical signal generated by the processing and control unit corresponding to said choice takes a desired spatial position relative to the slide and thereby provides either dark field or bright field illumination of said sample(s) in harmony with the choice and further enables thereby the visibility of the sample(s) on the slide independently of the fact whether said sample(s) was(were) stained previously with dyestuffs that are visible or invisible in transmitted light.

The present specification also discloses the setup which comprises a second light source, in a fixed spatial position, for bright field illumination of the sample(s) along with said light source being capable of occupying various spatial positions and providing dark field illumination of the sample(s). A further embodiment of the setup according to the invention may also include, according to needs, a displaceable masking element, as well as a guiding member that limits the displacement of the light source for dark field illumination of said sample(s) to a given spatial path. Said optical detector may equally be a contrast-measuring device, a light intensity measuring device, an imaging and/or an image recording device. Said light sources providing dark field illumination of the sample(s) can be provided in the form of a single light source.

The present invention relates to the method, wherein the above detailed setup is applied for dark field digitization of samples containing no dyestuffs visible in transmitted light, furthermore to the method, wherein the above detailed setup is applied for dark field digitization of samples stained with dyestuffs that are visible in transmitted light. The present specification also discloses the method, wherein the above discussed setup is used for bright field digitization of samples with no dyestuffs visible in transmitted light, and furthermore the method, wherein the above discussed setup according to the invention is used for bright field digitization of samples containing dyestuffs that are visible in transmitted light.

In what follows, the invention is discussed in more detail in relation to its several preferred embodiments with reference to the attached drawing, wherein
- Figure 1 illustrates schematically a possible embodiment of the setup to digitize samples on a slide, in side elevation;
- Figure 2 shows schematically a possible further embodiment of the setup to digitize samples on a slide, also in side elevation; and
- Figure 3 illustrates schematically a possible embodiment of the inventive setup to digitize samples on a slide, in side elevation, wherein the embodiment shown makes use of a linear illumination, i.e. an illumination along a line.

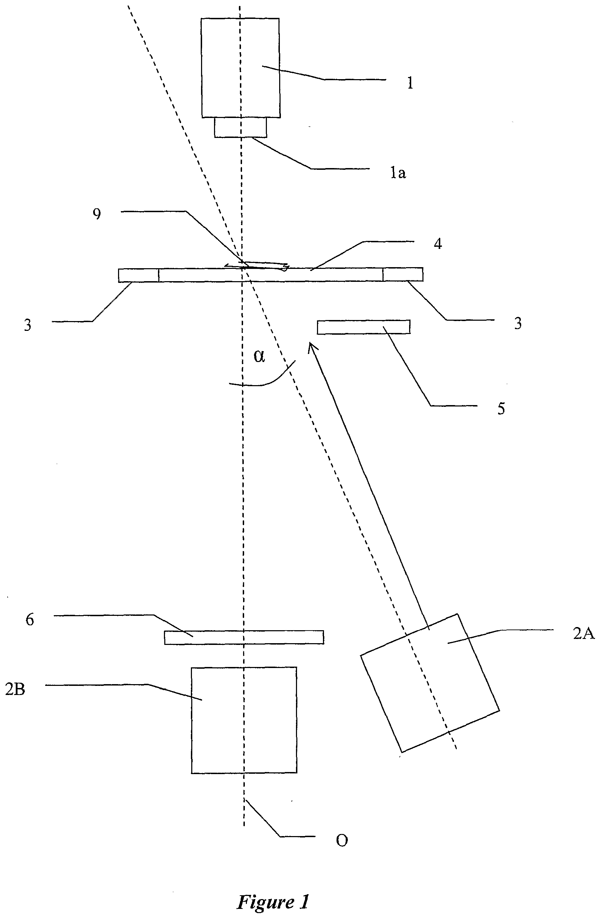

A setup to digitize samples on a slide, shown in Figure 1, comprises an optical axis O (drawn by a dotted-dashed line), an optical detector 1 with a light sensing surface 1a arranged on the optical axis O, a slide holder 3 being essentially perpendicular to the optical axis O and a fixed-position (first) light source 2B. A slide 4 with sample(s) 9 stained with a dyestuff that is either visible or invisible in transmitted light is arranged/clamped within said slide holder 3 in a *per* se known manner. Said sensing surface 1a lies in a plane that is essentially perpendicular to the optical axis O and it faces towards the slide holder 3. Moreover, due to the fact that the optical detector 1 can be shifted in a plane located at right angle to the optical axis O, said sensing surface 1a can also be shifted relative to a certain portion of the slide 4 in a plane being essentially parallel with the plane of said portion. In this embodiment, said light source 2B is preferentially arranged on the optical axis O, on the side of said slide holder 3 that locates opposite to the optical detector 1 and it faces towards said optical detector 1. That is, at least a portion of light emitted by said light source 2B propagates towards the optical detector 1 after exiting the light source 2B.

The slide holder 3 is provided by a slide holder well-known in the field of microscopy which, on the one hand, for focusing purposes is displaceable along the optical axis O in a way known by a skilled person in the art, and, on the other hand, for an appropriate in-plane positioning of the slide 4 with the sample 9 arranged therein, said slide holder 3 can arbitrarily be displaced in the plane perpendicular to the optical axis O. Displacements of the slide holder 3 along the optical axis O and/or in a direction perpendicular to the latter can be accomplished by a *per* se known slide displacing mechanism (the one taught in detail e.g. in International Patent Appl. No. PCT/IB2005/050351). Naturally, a displacement of said slide holder 3 can also be performed manually by means of a suitable device (e.g. a micrometrical screw) providing adequately fine steps.

In an embodiment of the setup to digitize samples on a slide, bright field illumination of the one or more samples 9 on the slide 4 in transmitted light is provided by the light source 2B, as shown in Figure 1. Optionally, there is a diffuser 6 inserted into the path of the illuminating light emitted by the light source 2B into between said light source 2B and said slide holder 3 on the optical axis O. Said diffuser 6 serves to transform the light of said source 2B into an evenly scattered light, if necessary. Said diffuser 6 is of spatial dimensions that enable the illumination of the slide 4 arranged in said slide holder 3 with a homogeneous light prepared by the diffuser 6 at least in those regions of the slide 4 where the sample(s) 9 locates/locate (as is apparent to a person skilled in the art, on the side of the slide 4 that is opposite to the sample-carrying side of said slide 4).

The embodiment of the setup according to the invention illustrated in Figure 1 is also provided with a further light source 2A. Said (second) light source 2A illuminates the slide 4 in the slide holder 3, and hence the sample(s) 9 as well, at an angle α from the optical axis O. Thus, dark field illumination of said sample(s) 9 is achieved. Angle α preferably falls between 5° and 85° and more preferably between 5° and 60°. In case of need, a masking element 5 is placed into the path of at least a portion of the light exiting said light source 2A. By means of said masking element 5, the incidence of direct light from the source 2A onto the optical detector 1 can be prevented. In this way, the image contrast and quality can be enhanced.

Depending on what kind of processing (i.e. in bright field or dark field illumination) of the slide 4 is to be performed by the setup illustrated in Figure 1, only one of the light sources 2A and 2B will be operated at a time. It is noted that the selected light source 2A, 2B of desired illumination can be any suitable light source with a continuous or a discrete (i.e. emission only at certain wavelengths) spectrum. In this respect, light emitting diodes (LEDs) emitting at one or more wavelengths or arrays of diodes that correspond to a given spatial pattern are highly preferred here.

The light scattered from or transmitted by the slide 4, or a portion thereof, illuminated by the light source 2A or 2B, strikes on the sensing surface 1a of the optical detector 1, where it is converted into digital signals carrying pieces of information on the slide or on the certain portion thereof. An output of said optical detector 1 is in data communication connection with the processing and control unit (not illustrated in the drawing) and leads the obtained signals into the processing and control unit for further processing/evaluation, and optionally to display. Said at least one light source 2A serving for dark field illumination of the sample(s) 9 and said light source 2B responsible for bright field illumination of said sample(s) 9 are also connected electrically to the processing and control unit; the desired switch-on and switch-off of the actually chosen light source described below in detail are equally governed by said processing and control unit. Displacements of the above mentioned slide displacing mechanism required to focus on the slide and/or to achieve an in-plane positioning of said slide are also governed by said processing and control unit. In an embodiment, said processing and control unit is provided by a personal computer, however, it can also be embodied as a combination of other devices.

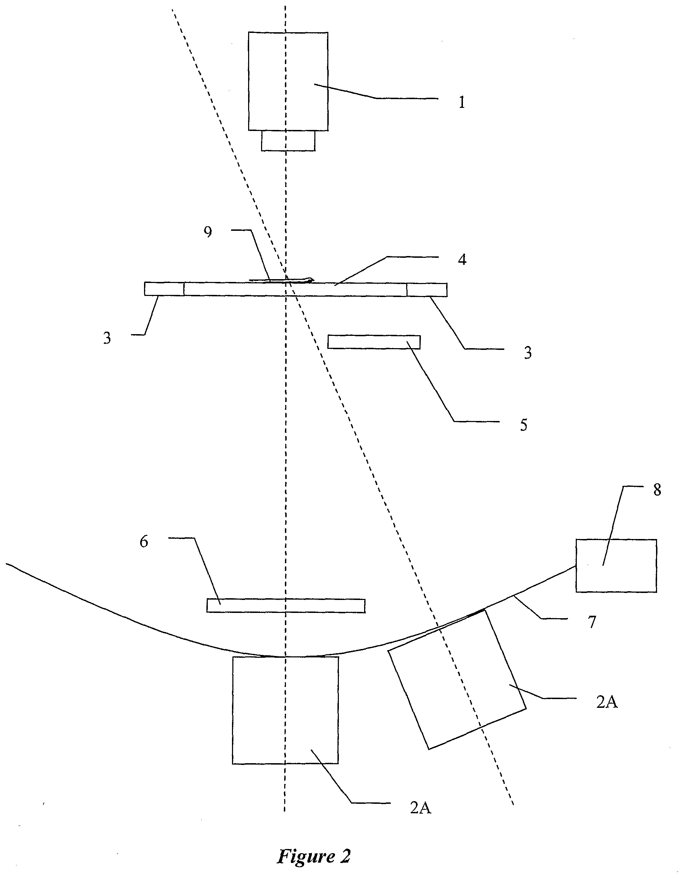

Figure 2 illustrates schematically a possible preferred embodiment of the setup to digitize samples on a slide. As it can be seen from Figure 2, this embodiment of the setup differs from the one illustrated in Figure 1 in the feature that here only a single displaceable light source 2A is used (shown up in Figure 2 in its two different positions) instead of the fixed-position and the movable light sources providing bright field and dark field illumination, respectively. Said displaceable light source 2A either forms an angle with the axis of the optical detector 1 or is located on the axis thereof. To displace said light source 2A along a given path defined by a desired guiding member, preferably by a rail 7 (which is optionally curved), a stepping motor 8 is provided. Preferentially, said motor 8 is also connected electrically to the processing and control unit, however, it can be operated by means of an other control device that is independent of said processing and control unit.

In this embodiment, the diffuser 6 converts the parallel light beams coming from the displaceable light source 2A, which are needed for dark field illumination of the slide 4, into a scattered light, enabling thereby bright field illumination of the whole slide 4 or at least a portion thereof that carries said sample(s) 9 by means of the same displaceable light source 2A when said source 2A occupies a position just on the optical axis.

In the setups shown, the optical detector 1 faces towards the slide 4, thus it receives light beams scattered from or transmitted by the slide 4 and converts them into digital signals, as discussed earlier.

It is noted that the foregoing embodiments are merely illustrative of the the setup to digitize samples on a slide.

As it is well-known, samples with visible dyestuffs are worth being studied by bright field illumination, as it is simpler to perform and gives nice results for light-colored - contrasty - samples in a rapid and simple manner. Moreover, the image shows up in colors that are accustomed in traditional microscopic imaging. The images obtained in dark field illumination on samples stained with visible dyestuffs are generally much more contrasty than the images captured by traditional (i.e. bright field) illumination. However, such an imaging/image recording technique is more complicated and slower, and in addition the sample shows up in the image in false colors (often similarly to the negative) that can be quite disturbing. Samples with no visible dyestuffs (e.g. stained with a fluorescent dye) are worth studying merely in dark field illumination, since these are unobservable in traditional illumination. Therefore, it is expedient to digitize a certain sample in both types of illumination in a single run, one after the other (that is, with no further manipulation of the sample).

In what follows, the operation of the embodiment of the setup shown in Figure 1 is discussed in detail.

After starting the system, the slide 4 is placed into the slide holder 3. Then a decision is made as to whether dark field illumination or bright field illumination is to be used. It should be here noted that the inventive solutions are also apt for the operation in any illumination mode chosen by the processing and control unit arbitrarily. In harmony with the type of illumination chosen, the following steps are performed (independently of the fact whether or not the sample(s) contains/contain dyestuffs that are visible or invisible in transmitted light) in a dark field digitization process:
- a portion of or the whole slide 4 is illuminated in a given angle by the light source 2A so as to inhibit striking of direct light beams onto the optical detector 1 by means of the masking element 5;
- the light incident on and/or scattered by the slide 4 is detected by the optical detector 1, that is, the light from said slide 4 reaching the sensing surface 1a is captured by the optical detector 1 and the thus obtained pieces of information are transmitted to the processing and control unit that operates the setup;
- based on the incoming pieces of information, sample(s) 9 are selected on the slide 4 by the processing and control unit in an automated manner;
- a high-resolution image(s) of exclusively the sample(s) 9 is(are) recorded by the optical detector 1 in an automated manner.

In a bright field digitization process performed by the setup shown in Figure 1, the following steps are completed (independently of the fact whether or not the sample(s) contains/contain dyestuffs that are visible or invisible in transmitted light):
- a portion of or the whole slide 4 is transilluminated by the light source 2B;
- the light passing through the slide 4 is detected by the optical detector 1 and the thus obtained pieces of information are transmitted to the processing and control unit;
- making use of the incoming pieces of information, on the basis of the contrast, light intensity between the dark and the bright regions, sample(s) 9 are selected on the slide 4 by the processing and control unit in an automated manner;
- a high-resolution image(s) of exclusively the sample(s) 9 is(are) recorded by the optical detector 1 in an automated manner;
- the thus obtained data set is evaluated and then the high-resolution image(s) captured by the optical detector 1 is(are) displayed to the user/operator by the processing and control unit.

The steps of the above two processes can be performed one after the other, however, it is also possible to change from one of the processes in the course of performing to the subsequent step of the other process.

The operation of the embodiment shown in Figure 2 is as follows.

After starting the system, the slide 4 is placed into the slide holder 3. Then a decision is made as to whether dark field illumination or bright field illumination is to be used. In harmony with the type of illumination selected, the following steps are performed (independently of the fact whether or not the sample(s) contains/contain dyestuffs that are visible or invisible in transmitted light) in a dark field digitization process:
- by means of the motor 8, the light source 2A is moved along the rail 8 forming the guiding member to a position characterized by an angle α selected arbitrarily, and then a portion of or the whole slide 4 is illuminated by the light source 2A in this position thereof;
- in conformity with moving said light source 2A, preferably, the masking element 5 is also displaced so as to inhibit accidental striking of direct light beams onto the optical detector 1;
- in conformity with moving said light source 2A, if necessary, the diffuser 6 is also displaced so as not to inhibit light beams coming from the light source 2A by it when dark field illumination is on;
- the light incident on and/or scattered by the slide 4 is detected by the optical detector 1 and the thus obtained pieces of information are transmitted to the processing and control unit that operates the setup;
- based on the incoming pieces of information, sample(s) 9 are selected on the slide 4 by the processing and control unit in an automated manner;
- a high-resolution image(s) of exclusively the sample(s) 9 is(are) recorded by the optical detector 1 in an automated manner;
- the thus obtained data set is evaluated and then the high-resolution image(s) taken by the optical detector 1 is(are) displayed to the user/operator by the processing and control unit.

In a bright field digitization process performed by the setup as shown in Figure 2, the following steps are completed (independently of the fact whether or not the sample(s) contains/contain dyestuffs that are visible or invisible in transmitted light):
- the light source 2A is aligned with the slide 4 and the optical detector 1;
- in conformity with moving said light source 2A, the masking element 5 is also displaced in order that it not screen out;
- in conformity with moving said light source 2A, the diffuser 6 is adjusted to occupy a position in which it is perpendicular to the axis defined by the light source 2A and the optical detector 1 so as to convert light beams coming from said light source 2A into scattered diffuse light;
- the slide 4 is transilluminated with the thus generated light;
- the light passing through the slide 4 is detected by the optical detector 1 and the pieces of information thus collected are transmitted to the processing and control unit;
- making use of the incoming pieces of information, on the basis of the contrast, light intensity between the dark and the bright regions, sample(s) 9 of the slide 4 are selected by the processing and control unit in an automated manner;
- a high-resolution image(s) of exclusively the sample(s) 9 is(are) recorded by the optical detector 1 in an automated manner;
- the thus obtained data set is evaluated and the high-resolution image(s) captured by the optical detector 1 is(are) displayed to the user/operator by the processing and control unit.

In the steps of the above processes, to illuminate a portion of or the whole surface of the slide 4, the slide 4 is displaced by the slide holder 3, while the light source(s) 2A (2B) and the optical detector 1 are kept in fixed positions.

To illuminate a portion of or the whole surface of the slide 4, the light source(s) 2A (2B) is(are) displaced, while the slide 4 and the optical detector 1 are kept in fixed positions.

However, it is equally possible that a portion of or the whole surface of the slide 4 is illuminated by the light source 2A (2B) and the optical detector 1 is displaced in such a way that reflected light always strike the optical detector 1 under an appropriate angle.

A yet further possibility is to displace at least two components simultaneously from the above three components, for example the slide 4 and the optical detector 1 are displaced and the light source 2A (2B) is kept in a fixed position.

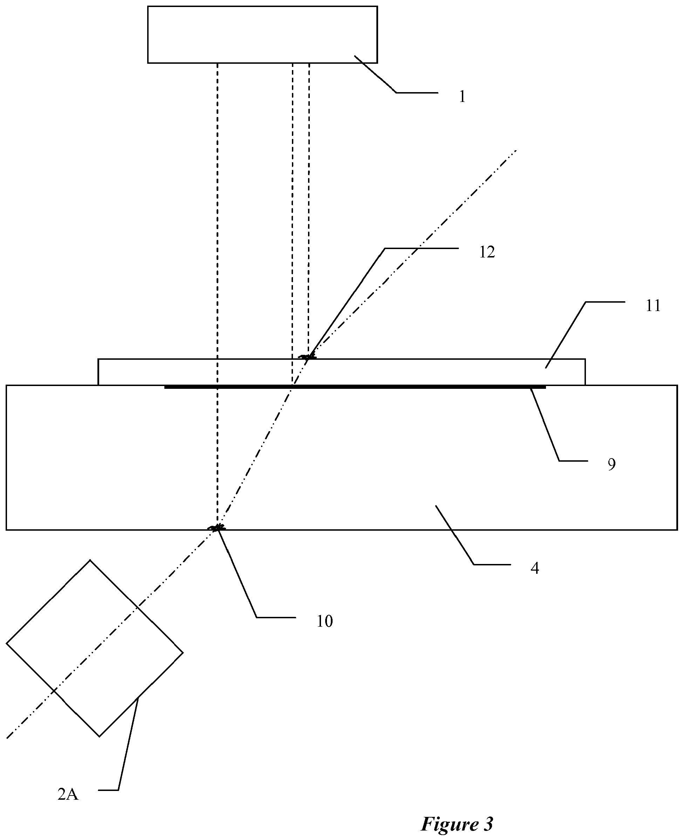

In a possible embodiment of the inventive setup illustrated schematically in Figure 3, the surface of slide 4 or a portion thereof is exposed to a linear illumination generated by the light source 2A located at an angle from the optical axis. In this way, due to the thickness of the slide 4 made of glass and the refraction index of its material, beams scattered from a contamination 10 on the slide 4, from the sample 9 itself and from a cover glass 11 placed onto the sample 9, as well as from a contamination 12 present on said cover glass 11 enter the optical detector 1 apart from one another. Thus, the contamination 10, the sample 9, the cover glass 11 and the contamination 12 on the cover glass can also be seen in the digitized image separated from each other. Moreover, for an illumination provided by the light source 2A that forms an angle with the optical axis, the light coming from a contamination 12 located either on the bottom surface of the slide 4 or on the top surface of the cover glass 11 reaches the optical detector 1 with an intensity that is smaller than the intensity of the light coming from the sample 9 itself or it simply does not reach the optical detector 1 at all. In this way, suppression/elimination of the contamination 12 from the image of the slide 4 becomes significantly simpler or will take place automatically when said slide 4 is exposed to an illumination at an angle from the optical axis.

Here, the term "linear illumination" refers to an illumination, wherein the (appropriately shaped) illuminating streak of light emitted by the light source 2A and incident on the slide 4 exhibits a dimension along one of the in-plane dimensions of the slide 4 which is much greater than its dimension along the other in-plane dimension of said slide 4. A ratio for said dimensions of the illuminating streak of light considered ranges from 1:50 to 1:100, more preferably from 1:60 to 1:80. In particular, the larger dimension of the streak of light corresponds to the length of a side of the slide 4 under study. When rectangular slides known and commonly used in the art are concerned, this side will be the shorter side (i.e. its width) of the slide under study.

When dark field illumination is used, the light source emits parallel beams of light, while in bright field illumination the slide is exposed to scattered light. As it was previously mentioned, light from the visible spectrum (that is, white light) is made use of for both types of illumination, however, an illumination at other wavelengths would be possible as well.

A change-over between dark field illumination and bright field illumination can be simply and rapidly accomplished in both setups shown in Figure 1 and Figure 2.

Naturally, images of different contrast and contour are obtained in dark field and bright field illuminations that are processed by the processing and control unit as discussed previously.

In the studies performed by the inventors it was found that the image gets more and more contrasty as the light source(s) approaches/approach the optical axis, however, it has to be ensured by proper masking that no light beams of the light source(s) could directly reach the sensing surface of the optical detector. To this end, a preferred angle α of incidence corresponds to the angle from the optical axis ranging from 5° to 85°, and more preferably from 5° to 60°, while the best contrast might exceed the value of 1:10, that is more than enough to digitize the sample on the slide in dark field illumination.

Dark field illumination makes best visible the tissue and the TMA (tissue/tumor micro array) samples, however it also works with smear samples.

Dark field illumination results in images of good contrast for even sections containing dyestuffs that are visible in transmitted light (that is, stained e.g. with such dyes), and thus it is suitable for the study of such samples as well.

In particular, when a slide with an unknown sample is to be digitized, as a first step, recording of a preview image can be sought to be performed in bright field illumination which can be performed in a much simpler and faster way. If it succeeds, and the obtained differences in contrast of the image are large enough to find the location of the sample on said slide by the algorithm used to determine sample location on the slide, the task is completed and the sample can be digitized. If, however, the image captured in bright field illumination is not contrasty enough to allow a unique localization of the sample by the algorithm, a change-over to dark field illumination (which is more complicated, can be completed slower and gives false colors) is performed, and thereby an image of higher contrast is captured, by means of which the location of the sample can be determined with less uncertainty and more easily (even if a purely stained sample or a contaminated sample or a fluorescent sample be considered, and wherein just these are the reasons for failing to capture an image of adequate quality in bright field illumination). In case of the setups disclosed, the change-over between bright filed and dark field illumination is performed not mechanically; it is merely achieved by switching on and off the light source(s) and/or by displacing said light source(s) into proper spatial positions relative to the slide to be digitized.

Besides its simplicity, a further advantage of the solution discussed in detail is its suitability for automatically finding and digitizing the samples stained with dyestuffs that are invisible in transmitted light by naked eye, and if needed also the samples containing visible dyestuffs, both in dark field illumination and bright field illumination. That is, a person carrying out an assay does not need to mark those portions of the slide that are to be studied by himself/herself. The solution hence involves the advantages of dark field illumination and bright field illumination both and can be nicely used to detect freshly stained or undyed samples as well. Thus, by means of it the time taken by digitization can also be significantly decreased by looking up the sample location in the preview image.

A significant amount of time can be spared by the possibility of rapid change-over between dark field illumination and bright field illumination (switch-over between light sources and/or adequate spatial positioning of the light source providing the illumination) integrated into a single setup. In addition, the methods disclosed are equally apt for the analysis of sample(s) stained with dyestuffs that are either visible or invisible by naked eye with having a priori no information on the type of dyestuffs applied in a previous staining step.

## Claims

1. A setup to digitize a sample (9) in dark field illumination, the sample (9) located on a rectangular slide (4) commonly used in the art, said slide (9) having a first thickness, made of glass having a first refractive index and covered by a cover glass (11), the setup comprising
- a light source (2A);
- a detector (1) with a light sensing surface (1a);
- a slide holder (3) adapted to occupy a spatial position between the light source (2A) and the detector (1), said slide holder (3) configured to receive the slide (4) carrying the sample (9), wherein said light sensing surface (1a) and said slide (4) are arranged along a common optical axis (O), and the light sensing surface (1a) and the slide (4) are essentially perpendicular to said optical axis (O);
- said light source (2A) is placed on the side of the slide holder (3) which is opposite to the light sensing surface (1a), wherein said light sensing surface (1a) is adapted to receive light emitted by said light source (2A), scattered from the slide (4) and striking on the light sensing surface (1a); and
- a processing and control unit electrically connected with said light source (2A) and being in data communication connection with said detector (1), wherein
said detector (1) being configured to generate digital signals carrying information on a portion of the slide (4) upon illuminating said slide portion by the light source (2A) and to transmit said digital signals to the processing and control unit through the data communication connection, ***characterized in* that**
said light source (2A) is adapted to be operated upon a control signal from said processing and control unit, the control signal being provided in the form of an electrical signal that commands said light source (2A) to occupy one of said spatial positions, and wherein
said light source (2A) is further adapted to occupy various spatial positions relative to the optical axis (O) to provide illumination of the slide (4) in the slide portion at any given illumination angle (α) ranging from 5° to 85°,
wherein a dimension of said slide portion along one of the in-plane dimensions of the slide (4) is significantly larger than a dimension of said slide portion along the other in-plane dimension of said slide (4), and wherein illumination of the slide (4) in the slide portion takes place by a streak of light having a first dimension along one of the in-plane dimensions of the slide (4) and a second dimension along the other in-plane dimension of the slide (4), the ratio of said first and second dimensions of the illuminating streak of light ranges from 1:50 to 1:100 and the larger dimension of said illuminating streak of light corresponds to one of the dimensions of the slide (4), and thus
to generate images of various layers (4, 9, 10, 11, 12) located along the thickness of said slide (4) in the illuminated portion of the slide (4) on said light sensing surface (1a) decomposed with respect to said layers (4, 9, 10, 11, 12).

2. The setup according to Claim 1, **characterized in that** the detector (1) is provided by one of a contrast-measuring device, or a light intensity measuring device, or an imaging and/or an image recording device.

3. The setup according to Claim 1 or 2, **characterized in that** to scan the whole surface of the slide (4), the sensing surface (1a) and the slide (4) are arranged so as to be displaceable relative to each other in their planes.

4. The setup according to any of Claims 1 to 3, **characterized in that** the light source (2A) is provided by at least one light emitting diode.

5. The setup according to any of Claims 1 to 4, **characterized in that** said setup is equipped with a masking element (5) insertable into the path of light emitted by said light source (2A) so as to prevent direct incidence of light from the light source (2A) onto said sensing surface (1a).

6. A method to digitize a sample (9) in dark field illumination, the sample (9) located on a rectangular slide (4) commonly used in the art, said slide (9) having a first thickness, made of glass having a first refractive index and covered by a cover glass (11), the method comprising the steps of
- illuminating at least a portion of the slide (4) carrying the sample (9),
- receiving light from said illuminated slide portion by a light sensing surface (1a) forming part of a detector (1) on the side of the slide (4) opposite to the illumination,
- identifying a sample (9) on said slide portion on basis of the information carried from the illuminated slide portion by light received on said light sensing surface (1a),
- digitally recording a high-resolution image of the sample (9) identified, wherein
dark field illumination is performed by a light source (2A) adapted to occupy various spatial positions to provide illumination of said slide (4) from different angles, ***characterized in* that** the method further comprising the steps of
providing illumination of the slide (4) is performed in said slide portion at a given illumination angle (α) ranging from 5° to 85° in the spatial position occupied by said light source (2A), wherein a dimension of said slide portion along one of the in-plane dimensions of the slide (4) is significantly larger than a dimension of said slide portion along the other in-plane dimension of said slide (4), wherein illuminating the slide (4) in said slide portion takes place by a streak of light having a first dimension along one of the in-plane dimensions of the slide (4) and a second dimension along the other in-plane dimension of the slide (4), the ratio of said first and second dimensions of the illuminating streak of light ranges from 1:50 to 1:100 and the larger dimension of said illuminating streak of light corresponds to one of the dimensions of the slide (4) and thereby
generating images of various layers (4, 9, 10, 11, 12) located along the thickness of said slide (4) in said illuminated portion of the slide (4) on said light sensing surface (1a) decomposed with respect to said layers (4, 9, 10, 11, 12).

7. The method according to Claim 6, **characterized in that** a masking element (5) is inserted into the light propagation path between the illuminating light source (2A) and the slide (4), said masking element (5) being displaced in conformity with the light source (2A) so as to prevent light from said light source (2A) reaching the light sensing surface (1a) directly.

8. The method according to Claim 6 or 7, **characterized in that** dark field illumination is provided by displacing the light source (2A) into different positions along a given path.

9. The method according to Claim 6, **characterized in that** said larger dimension of the illuminating streak of light corresponds to the dimension of the shorter side of said slide (4).

## Patentansprüche

1. Aufbau zum Digitalisieren einer Probe (9) in einer Dunkelfeldbeleuchtung, wobei sich die Probe (9) auf einem rechteckigen Träger (4) befindet, der für gewöhnlich in der Technik verwendet wird, wobei der Träger (9) eine erste Dicke aufweist, hergestellt aus Glas, das einen ersten Brechungsindex aufweist, und abgedeckt von einem Deckglas (11), der Aufbau umfassend
- eine Lichtquelle (2A);
- einen Detektor (1) mit einer Lichterfassungsoberfläche (1a);
- eine Trägerhalterung (3), die dazu angepasst ist, eine räumliche Position zwischen der Lichtquelle (2A) und dem Detektor (1) einzunehmen, wobei die Trägerhalterung (3) dazu ausgelegt ist, den Träger (4) aufzunehmen, der die Probe (9) trägt, wobei die Lichterfassungsoberfläche (1a) und der Träger (4) entlang einer gemeinsamen optischen Achse (O) angeordnet sind und die Lichterfassungsoberfläche (1a) und der Träger (4) im Wesentlichen senkrecht zu der optischen Achse (O) sind;
- wobei die Lichtquelle (2A) auf der Seite der Trägerhalterung (3) platziert ist, die der Lichterfassungsoberfläche (1a) gegenüberliegt, wobei die Lichterfassungsoberfläche (1a) dazu angepasst ist, Licht zu empfangen, das von der Lichtquelle (2A) ausgestrahlt wird, von dem Träger (4) gestreut wird und auf die Lichterfassungsoberfläche (1a) trifft; und
- eine Verarbeitungs- und Steuereinheit, die elektrisch mit der Lichtquelle (2A) verbunden ist und in Datenkommunikationsverbindung mit dem Detektor (1) steht, wobei wobei der Detektor (1) dazu ausgelegt ist, digitale Signale zu erzeugen, die Informationen über einen Abschnitt des Trägers (4) tragen, wenn der Trägerabschnitts durch die Lichtquelle (2A) beleuchtet wird, und die digitalen Signale durch die Datenkommunikationsverbindung an die Verarbeitungs- und Steuereinheit zu übertragen, **dadurch gekennzeichnet, dass**
die Lichtquelle (2A) dazu angepasst ist, auf ein Steuersignal von der Verarbeitungs- und Steuereinheit hin betrieben zu werden, wobei das Steuersignal in der Form eines elektrischen Signals bereitgestellt wird, das die Lichtquelle (2A) anweist, eine der räumlichen Positionen einzunehmen, und wobei
die Lichtquelle (2A) weiter dazu angepasst ist, verschiedene räumliche Positionen relativ zu der optischen Achse (O) einzunehmen, um Beleuchtung des Trägers (4) in dem Trägerabschnitt bei jeglichem Beleuchtungswinkel (α) von 5° bis 85° bereitzustellen,
wobei eine Dimension des Trägerabschnitts entlang einer der In-Ebene-Dimensionen des Trägers (4) erheblich größer als eine Dimension des Trägerabschnitts entlang der anderen In-Ebene-Dimension des Trägers (4) ist und wobei Beleuchtung des Trägers (4) in dem Trägerabschnitt durch einen Lichtstrahl erfolgt, der eine erste Dimension entlang einer der In-Ebene-Dimensionen des Trägers (4) und eine zweite Dimension entlang der anderen In-Ebene-Dimension des Trägers (4) aufweist, wobei das Verhältnis der ersten und der zweiten Dimension des beleuchtenden Lichtstrahls von 1:50 bis 1:100 reicht und die größere Dimension des beleuchtenden Lichtstrahls einer der Dimensionen des Trägers (4) entspricht, und dadurch,
Bilder verschiedener Schichten (4, 9, 10, 11, 12) zu erzeugen, die sich entlang der Dicke des Trägers (4) in dem beleuchteten Abschnitt des Trägers (4) auf der Lichterfassungsoberfläche (1a) befinden, die in Bezug auf die Schichten (4, 9, 10, 11, 12) zerlegt sind.

2. Aufbau nach Anspruch 1, **dadurch gekennzeichnet, dass** der Detektor (1) durch eine von einer Kontrastmessvorrichtung, oder einer Lichtintensitätsmessvorrichtung, oder einer Bildgebungs- und/oder einer Bildaufzeichnungsvorrichtung bereitgestellt wird.

3. Aufbau nach Anspruch 1 oder 2, **dadurch gekennzeichnet, dass** die Erfassungsoberfläche (1a) und der Träger (4), um die gesamte Oberfläche des Trägers (4) abzutasten, so angeordnet sind, dass sie relativ zueinander in ihren Ebenen verschoben werden können.

4. Aufbau nach einem der Ansprüche 1 bis 3, **dadurch gekennzeichnet, dass** die Lichtquelle (2A) durch mindestens eine lichtemittierende Diode bereitgestellt wird.

5. Aufbau nach einem der Ansprüche 1 bis 4, **dadurch gekennzeichnet, dass** der Aufbau mit einem Maskierungselement (5) ausgestattet ist, das in den Lichtpfad eingesetzt werden kann, der von der Lichtquelle (2A) emittiert wird, um direkten Lichteinfall von der Lichtquelle (2a) auf die Erfassungsoberfläche (1a) zu verhindern.

6. Verfahren zum Digitalisieren einer Probe (9) in einer Dunkelfeldbeleuchtung, wobei sich die Probe (9) auf einem rechteckigen Träger (4) befindet, der für gewöhnlich in der Technik verwendet wird, wobei der Träger (9) eine erste Dicke aufweist, die aus Glas hergestellt ist, das einen ersten Brechungsindex aufweist, und von einem Deckglas (11) abgedeckt ist, das Verfahren die Schritte umfassend zum
- Beleuchten mindestens eines Abschnitts des Trägers (4), der die Probe (9) trägt,
- Empfangen von Licht von dem beleuchteten Trägerabschnitt durch eine Lichterfassungsoberfläche (1a), die einen Teil eines Detektors (1) auf der Seite des Trägers (4) bildet, die der Beleuchtung gegenüberliegt,
- Erkennen einer Probe (9) auf dem Trägerabschnitt auf der Grundlage der Informationen, die von dem beleuchteten Trägerabschnitt durch Licht übermittelt werden, das auf der Lichterfassungsoberfläche (1a) empfangen wird,
- digitales Aufzeichnen eines hochauflösenden Bilds der erkannten Probe (9), wobei
Dunkelfeldbeleuchtung durch eine Lichtquelle (2A) durchgeführt wird, die dazu angepasst ist, verschiedene räumliche Positionen einzunehmen, um Beleuchtung des Trägers (4) aus unterschiedlichen Winkeln bereitzustellen, ***dadurch gekennzeichnet,* dass** das Verfahren weiter die Schritte umfasst zum
Bereitstellen von Beleuchtung des Trägers (4), die in dem Trägerabschnitt bei einem gegebenen Beleuchtungswinkel (α) von 5° bis 85° in der räumlichen Position durchgeführt wird, die die Lichtquelle (2A) einnimmt, wobei eine Dimension des Trägerabschnitts entlang einer der In-Ebene-Dimensionen des Trägers (4) erheblich größer als eine Dimension des Trägerabschnitts entlang der anderen In-Ebene-Dimension des Trägers (4) ist, wobei Beleuchten des Trägers (4) in dem Trägerabschnitt durch einen Lichtstrahl erfolgt, der eine erste Dimension entlang einer der In-Ebene-Dimensionen des Trägers (4) und eine zweite Dimension entlang der anderen In-Ebene-Dimension des Trägers (4) aufweist, wobei das Verhältnis der ersten und der zweiten Dimension des beleuchtenden Lichtstrahls von 1:50 bis 1:100 reicht und die größere Dimension des beleuchtenden Lichtstrahls einer der Dimensionen des Trägers (4) entspricht, und dadurch
Erzeugen von Bildern verschiedener Schichten (4, 9, 10, 11, 12), die sich entlang der Dicke des Trägers (4) in dem beleuchteten Abschnitt des Trägers (4) auf der Lichterfassungsoberfläche (1a) befinden, die in Bezug auf die Schichten (4, 9, 10, 11, 12) zerlegt sind.

7. Verfahren nach Anspruch 6, **dadurch gekennzeichnet, dass** ein Maskierungselement (5) in den Lichtausbreitungspfad zwischen der beleuchtenden Lichtquelle (2A) und dem Träger (4) eingesetzt wird, wobei das Maskierungselement (5) in Übereinstimmung mit der Lichtquelle (2A) verschoben werden kann, um Licht von der Lichtquelle (2A) daran zu hindern, die Lichterfassungsoberfläche (1a) direkt zu erreichen.

8. Verfahren nach Anspruch 6 oder 7, **dadurch gekennzeichnet, dass** Dunkelfeldbeleuchtung bereitgestellt wird, indem die Lichtquelle (2A) zu unterschiedlichen Positionen entlang eines gegebenen Pfads verschoben wird.

9. Verfahren nach Anspruch 6, **dadurch gekennzeichnet, dass** die größere Dimension des beleuchtenden Lichtstrahls der Dimension der kürzeren Seite des Trägers (4) entspricht.

## Revendications

1. Installation pour numériser un échantillon (9) en éclairage en fond sombre, l'échantillon (9) étant situé sur une lame rectangulaire (4) couramment utilisée dans l'art, ladite lame (9) présentant une première épaisseur, fabriquée en verre présentant un premier indice de réfraction et recouverte d'un couvre-objet (11), l'installation comprenant
- une source de lumière (2A) ;
- un détecteur (1) avec une surface de détection de lumière (1a) ;
- un porte-lame (3) adapté pour occuper une position spatiale entre la source de lumière (2A) et le détecteur (1), ledit porte-lame (3) étant configuré pour recevoir la lame (4) portant l'échantillon (9), dans laquelle ladite surface de détection de lumière (1a) et ladite lame (4) sont agencées le long d'un axe optique commun (O), et la surface de détection de lumière (1a) et la lame (4) sont essentiellement perpendiculaires audit axe optique (O) ;
- ladite source de lumière (2A) est placée sur le côté du porte-lame (3) qui est opposé à la surface de détection de lumière (1a), dans laquelle ladite surface de détection de lumière (1a) est adaptée pour recevoir de la lumière émise par ladite source de lumière (2A), diffusée par la lame (4) et frappant la surface de détection de lumière (1a) ; et
- une unité de traitement et de commande électriquement reliée à ladite source de lumière (2A) et étant en liaison de communication de données avec ledit détecteur (1), dans laquelle
ledit détecteur (1) étant configuré pour générer des signaux numériques contenant des informations sur une partie de la lame (4) lors de l'éclairage de ladite partie de lame par la source de lumière (2A) et pour transmettre lesdits signaux numériques à l'unité de traitement et de commande par l'intermédiaire de la liaison de communication de données, ***caractérisée en ce que***
ladite source de lumière (2A) est adaptée pour être actionnée sur la base d'un signal de commande provenant de ladite unité de traitement et de commande, le signal de commande étant fourni sous la forme d'un signal électrique qui ordonne à ladite source de lumière (2A) d'occuper l'une desdites positions spatiales, et dans laquelle
ladite source de lumière (2A) est en outre adaptée pour occuper diverses positions spatiales par rapport à l'axe optique (O) pour fournir un éclairage de la lame (4) dans la partie de lame selon n'importe quel angle d'éclairage donné (α) allant de 5° à 85°,
dans laquelle une dimension de ladite partie de lame le long d'une des dimensions dans le plan de la lame (4) est considérablement plus grande qu'une dimension de ladite partie de lame le long de l'autre dimension dans le plan de ladite lame (4), et dans laquelle l'éclairage de la lame (4) dans la partie de lame se produit par un rayon de lumière présentant une première dimension le long d'une des dimensions dans le plan de la lame (4) et une seconde dimension le long de l'autre dimension dans le plan de la lame (4), le rapport entre lesdites première et seconde dimensions du rayon de lumière d'éclairage va de 1:50 à 1:100 et la plus grande dimension dudit rayon de lumière d'éclairage correspond à l'une des dimensions de la lame (4), et par conséquent
pour générer des images de diverses couches (4, 9, 10, 11, 12) situées le long de l'épaisseur de ladite lame (4) dans la partie éclairée de la lame (4) sur ladite surface de détection de lumière (1a) décomposée suivant lesdites couches (4, 9, 10, 11, 12).

2. Installation selon la revendication 1, **caractérisée en ce que** le détecteur (1) est fourni par l'un parmi un dispositif de mesure de contraste, ou un dispositif de mesure d'intensité lumineuse, ou un dispositif d'imagerie et/ou d'enregistrement d'image.

3. Installation selon la revendication 1 ou 2, **caractérisée en ce que**, pour balayer toute la surface de la lame (4), la surface de détection (1a) et la lame (4) sont agencées de manière à pouvoir être déplacées l'une par rapport à l'autre dans leurs plans.

4. Installation selon l'une quelconque des revendications 1 à 3, **caractérisée en ce que** la source de lumière (2A) est fournie par au moins une diode électroluminescente.

5. Installation selon l'une quelconque des revendications 1 à 4, **caractérisée en ce que** ladite installation est équipée d'un élément de masquage (5) pouvant être inséré dans le trajet de lumière émise par ladite source de lumière (2A) de manière à empêcher l'incidence directe de la lumière provenant de la source de lumière (2A) sur ladite surface de détection (1a).

6. Procédé de numérisation d'un échantillon (9) en éclairage en fond sombre, l'échantillon (9) étant situé sur une lame rectangulaire (4) couramment utilisée dans l'art, ladite lame (9) présentant une première épaisseur, fabriquée en verre présentant un premier indice de réfraction et recouverte d'un couvre-objet (11), le procédé comprenant les étapes de
- éclairage d'au moins une partie de la lame (4) portant l'échantillon (9),
- réception de la lumière provenant de ladite partie de lame éclairée par une surface de détection de lumière (1a) faisant partie d'un détecteur (1) sur le côté de la lame (4) opposé à l'éclairage,
- identification d'un échantillon (9) sur ladite partie de lame sur la base des informations contenues dans la partie de lame éclairée par la lumière reçue sur ladite surface de détection de lumière (1a),
- enregistrement numérique d'une image à haute résolution de l'échantillon (9) identifié, dans lequel
l'éclairage en fond sombre est effectué par une source de lumière (2A) adaptée pour occuper diverses positions spatiales pour fournir un éclairage de ladite lame (4) sous différents angles, ***caractérisé en ce que*** le procédé comprend en outre les étapes de
fourniture d'un éclairage de la lame (4) qui est effectué dans ladite partie de lame selon un angle d'éclairage donné (α) allant de 5° à 85° dans la position spatiale occupée par ladite source de lumière (2A), dans lequel une dimension de ladite partie de lame le long d'une des dimensions dans le plan de la lame (4) est considérablement plus grande qu'une dimension de ladite partie de lame le long de l'autre dimension dans le plan de ladite lame (4), dans lequel l'éclairage de la lame (4) dans ladite partie de lame se produit par un rayon de lumière présentant une première dimension le long d'une des dimensions dans le plan de la lame (4) et une seconde dimension le long de l'autre dimension dans le plan de la lame (4), le rapport entre lesdites première et seconde dimensions du rayon de lumière d'éclairage va de 1:50 à 1:100 et la plus grande dimension dudit rayon de lumière d'éclairage correspond à l'une des dimensions de la lame (4), et ainsi
génération d'images de diverses couches (4, 9, 10, 11, 12) situées le long de l'épaisseur de ladite lame (4) dans ladite partie éclairée de la lame (4) sur ladite surface de détection de lumière (1a) décomposée suivant lesdites couches (4, 9, 10, 11, 12).

7. Procédé selon la revendication 6, **caractérisé en ce qu'**un élément de masquage (5) est inséré dans le trajet de propagation de lumière entre la source de lumière d'éclairage (2A) et la lame (4), ledit élément de masquage (5) étant déplacé en conformité avec la source de lumière (2A) de manière à empêcher la lumière provenant de ladite source de lumière (2A) d'atteindre directement la surface de détection de lumière (1a).

8. Procédé selon la revendication 6 ou 7, **caractérisé en ce que** l'éclairage en fond sombre est fourni en déplaçant la source de lumière (2A) dans différentes positions le long d'un trajet donné.

9. Procédé selon la revendication 6, **caractérisé en ce que** ladite dimension la plus grande du rayon de lumière d'éclairage correspond à la dimension du côté le plus court de ladite lame (4).
